# EUROPEAN PATENT SPECIFICATION

(11) **EP 2 146 585 B1**
(45) Date of publication and mention of the grant of the patent: **24.07.2013**
(21) Application number: 08753851.8
(22) Date of filing: 24.04.2008
(51) Int. Cl.: A23J 3/00, A23J 3/08, A23L 1/05, A23L 1/0562, A23J 3/04, A23J 3/28, A23C 21/06, A23J 3/16

(54) **DAIRY PRODUCT AND PROCESS**
MOLKEREIPRODUKT UND MOLKEREIVERFAHREN
PRODUIT LAITIER ET PROCESSUS

(30) Priority: 24.04.2007 NZ 55474407
(43) Date of publication of application: 27.01.2010
(73) Proprietor: Fonterra Co-Operative Group Limited, Auckland (NZ); Taylor, Stephen Murray, Palmerston North (NZ)
(72) Inventor: YE, Aiqian, Palmerston North (NZ); TAYLOR, Stephen, Murray, Palmerston North (NZ)
(74) Representative: Barton, Matthew Thomas
(86) International application number: PCT/NZ2008/000090
(87) International publication number: WO 2008/130253

(56) References cited:
- EP-A1- 0 366 998
- WO-A1-00/54600
- WO-A1-01/05247
- WO-A1-99/51105
- WO-A1-2005/041677
- US-A- 3 892 873
- US-A- 4 720 390
- US-B1- 6 419 975
- US-B1- 6 511 695

## Description

### Technical field

The invention relates to gelled emulsions and processes for their preparation. The emulsions may be used in or as foods.

### Background art

Food with a gel-like consistency may be obtained by including a thickening agent within an aqueous medium. A variety of high molecular weight compounds have been used to form gels in foods. For example, starch, gums, pectins, and gelatines.

Egg proteins are frequently used for their thickening properties and also for their emulsifying properties. Eggs are expensive and require careful handling because of risks of contamination.

For thickening oil-in-water emulsions, one method involves use of whey proteins, which are commercially available in the dry state. US 4,720,390 describes a process for producing a gelled food product where an oil-in-water emulsion is prepared from an aqueous medium and a lipidic medium. The emulsion contains 4-12% weight w/v of gellable whey proteins and 2.5-40% by volume of the lipidic medium. The process is characterised in that the aqueous medium is homogenised with a lipidic medium under such conditions that the emulsion formed contains a homogenous series of fat globules having a diameter of from 140-6000 nm and a mean diameter of less than 1000 nm. The emulsion is heat treated to form the gel. US 4,720,390 does not teach anything about heat-treating emulsions, then forming gels later.

Hunt & Dalgleish (J. Food Sci. 60,1120-1131 (1995) prepared emulsions containing 20% soy bean oil made with 2% whey protein isolate (WPI) and a heat treatment. The resulting emulsions were described as stable. Direct heating is possible, for example infusion of high pressure steam. Hunt & Dalgleish do not teach heat-treatment of the emulsions and formation of gels later upon addition of salts or acid.

Line, Remondetto & Subirade (Cold gelation of β-lactoglobulin oil-in-water emulsions, Food Hydrocolloids, 19, 269-278, 2005) reported forming emulsion gels by mixing preheated β-lactoglobulin (6.65%) in water at room temperature with first oil and then CaCl₂. The resulting emulsion gels with high G' and good water-holding capacity were obtained by raising the oil concentration. Line, Remondetto & Subirade do not teach heat-treatment of the emulsions and formation of gels later upon addition of CaCl₂. These gels are not microbially stable Rosa, Sala, Van Vliet & Van de Velde (Cold gelation of whey protein emulsions, Journal of Texture Studies, 37, 516-537, 2006) reported that the cold gelation of emulsion obtained by mixing suspensions of soluble WPI aggregates with 40% (w/w) o/w stock emulsions stabilized with the same WPI aggregates after acidification by addition of Glucono-δ-lactone (GDL). Rosa, Sala, Van Vliet & Van de Velde do not teach the heat-treatment of the emulsions and formation of gels later upon acidification.

In a gel system containing emulsion droplets, the gel strength is generally influenced by the size of emulsion droplets. Gel strength increased as the droplet size decreased (US 4,720,390; McClements, Monahan and Kinsella (Effect of emulsion droplets on the rheology of whey protein isolate gels, Journal of Texture Studies, 24, 411-422, 1993).

It is an object of the present invention to provide a convenient process for preparing gelled products containing dairy proteins having good storage properties, the process not requiring that the emulsion be heated in its packaging or at least offer the public a useful choice.

### Disclosure of the Invention

In one aspect, the invention provides a method of preparing a gel comprising forming an oil-in-water emulsion by mixing oil or fat with an aqueous medium and homogenization at pressure in the range 100 to 2000 bar, wherein the mixture comprises 2-12% (w/w) protein and 5-40% (w/w) oil or fat or a mixture of oil and fat. The emulsion is heated to 50-200°C preferably 70-200°C for a period sufficient to denature the proteins without allowing a gel to form. Following the heat treatment and optional cooling, and optional storage, salt (*e.g*. Ca²⁺ or Na⁺) is added to the emulsion or the emulsion is acidified (*e.g*. to pH < 5.0) by addition of acid, or acid-forming products (*e.g*. Glucono-δ-lactone, GDL) or fermentation to form the gel.

In preferred embodiments the heated emulsion is very stable and then later destabilised by the addition of salt or acid to form the gel.

This convenient process can be applied to form an emulsion gel *in* situ after heat processing conditions, thus the emulsions don't need to be heated in the containers or packaging to form the gel. The emulsion may be heated before filling into containers or packaging, and then form the gel in containers or packaging after mixing with a gelation agent (salts or acidic agents) or fermentation.

Preferably, the heat treated emulsion is transferred to a pre-sterilised container and mixed aseptically with an emulsion gel strengthening agent, preferably a salt (Ca²⁺ or Na⁺) or an acid or fermentation.

The acid or salt may be a component of a mixture bringing other properties to the gel. For example the acid may be provided in an acidic fruit juice. Salt could be provided by a briny flavouring.

In the present invention, the emulsion made with unheated whey protein first can form the better emulsions (smaller size and more stable) at a given protein concentration than the emulsion made with heated whey protein described by Line, Remondetto & Subirade and Rosa, Sala, Van Vliet & Van de Velde in the work discussed in the Background art. The emulsions with the smaller size will form the stronger gels. This makes the lower protein concentrations are required to form the gels with required firmness.

In present invention, a important aspect is that the heated whey protein stabilized emulsion remains stable (liquid) without the formation of gel. This property is dependent on the concentrations of protein and oil/fat, as well as the mineral content in the emulsion. When the concentrations of protein or oil/fat are higher than a concentration, the emulsion will form a gel during heat treatment. In absence of salt, the upper limit of protein and oil/fat concentrations so that the emulsions remain liquid upon heating is identified in present invention (please see Example 1).

The protein can be from the group of proteins of animal or vegetable origin that form gels upon heating, such as whey proteins, soy proteins, myofibrillar (skeletal/meat) proteins, egg proteins and blood proteins (Ziegler G.R. & Foegeding E.A. (1990). Advances in Food and Nutrition Research, vol 34, 203-298) most preferably whey proteins, soy proteins, meat proteins.

Preferably, the protein content of the emulsion is 2-8% (w/w), more preferably 2-4%.

Preferably the protein is whey protein or soy protein, more preferably whey protein. Most preferably, the whey proteins are provided from a whey protein isolate (WPI) or a whey protein concentrate (WPC).

A whey protein concentrate (WPC) is a whey fraction in which at least 35% (w/w) of the total solids comprises whey proteins. WPCs are generally prepared by ultrafiltration and/or diafiltration of whey. Preferably, the protein composition is substantially that of the whey from which it is derived. For some applications WPCs with at least 50% (w/w) of the total solids are preferred.

A whey protein isolated (WPI) is a whey fraction in which at least 90% (w/w) of the total solids comprise whey proteins. WPIs are generally prepared by microfiltration or ion exchange in combination with ultrafiltration and/or diafiltration of whey. Again, the protein composition is preferably substantially that of the whey from which it was derived.

Preferably, the oil or fat is present in an amount from 7-35%, more preferably 7-25% w/w. Preferably, the oil is vegetable oil, for example, soy bean oil, sunflower oil, olive oil, canola oil, or peanut oil, and the fat is milk fat. Those who are skilled in the art would understand that many other oils or fat can be used. Mixing may be carried out in any manner suitable for producing the oil-in-water emulsion. Normally this is carried out by homogenisation in a 1- or 2-stage homogeniser.

The length of the heat treatment for denaturing the whey protein is usefully varied depending on the temperature of the heat treatment. Shorter heat treatments may be used at the higher temperatures.

Preferred temperatures are in the range 80-150°C, especially 80-90°C or 135°C-145°C. At 145°C, a heating time of 5 seconds - 30 minutes may be used whereas at 121-145°C a heating time of 5 seconds-15 minutes is preferred. The use of higher temperatures is preferred where microbial stability or sterility is important. Lower temperatures are used when storage times are not as long and may provide the benefit of improved flavour relative to that obtained at higher temperatures.

Emulsion gel can be formed by acidification to pH < 5.0, with the preferred a pH in the range of 3.0 to 5.0, more preferably pH 4.0 to 5.0.

Alternatively, gel formation can be brought about by adding inorganic ions to the emulsion after heat treatment, usually by addition of a salt Especially preferred are soluble calcium ions and sodium ions. Sodium chloride and calcium chloride are preferred salts. For sodium chloride, addition of sufficient salt to provide a concentration of exogenous sodium chloride of 10-300 mM is preferred, more preferably 100 -200 mM. Lower concentrations of calcium chloride may be used, with the preferred concentrations being in the range 4-100 mM.

Other ingredients may be included in the gel. One example is sugar, useful in preparing gel desserts. The components added may affect the gel strength. Increasing sugar concentration can increase gel firmness, possibly due to the increasing total solids in the emulsion. Those who are skilled in the art would understand that many useful additives could be incorporated to the water or the oil phases of the emulsion to improve the qualities of those emulsion gels, such as flavourings, colourants, and nutritional components.

The homogenisation pressure can be varied to vary the gel strength. Homogenisation pressure of 100-2000 bar is preferred for strong gels, preferably higher than 300 bar. The average droplet size ofemulsions are controlled at smaller than 1 µm or the droplet size distribution are between 0.05 to 10 µm.

In another variation, the salt is added aseptically and then the emulsion is aseptically transferred to their containers for aseptic packaging. In these embodiments, the preferred emulsions are those described as preferences above.

The invention also contemplates drying of solutions before gelling to be used to later prepare gels or to include in foods as a gelling or thickening agent. Typically spray-drying is used for the drying, optionally after dewatering, for example by evaporation, such as falling film evaporation. Other ingredients may be blended with dried emulsions.

Gelling occurs when the storage modulus G' is greater than the loss modulus G" and is generally recognisable to those skilled in the art. Denaturation of the heat-setting proteins can be assessed by native polyacrylamide gel electrophoresis by methods known to those skilled in the art. It is generally associated with molecular weight increase.

The term 'comprising' as used in this specification and claims means 'consisting at least in part of', that is to say when interpreting statements in this specification and claims which include that term, the features, prefaced by that term in each statement, all need to be present but other features can also be present. Related terms such as 'comprise' and 'comprised' are to be interpreted in similar manner.

### Brief Description of the Drawings

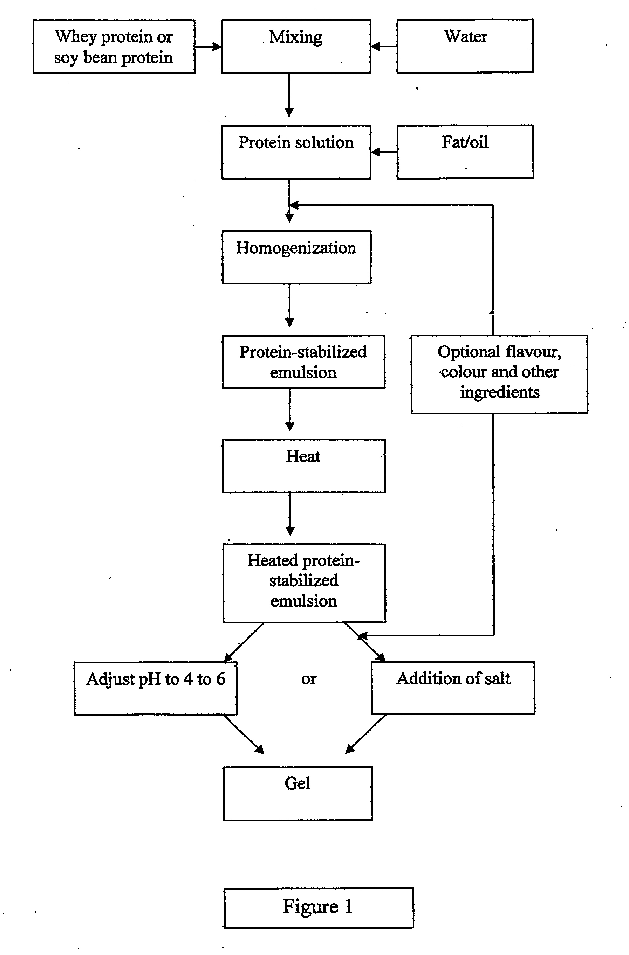

**Figure 1** shows the schematic diagram of the process of the invention.
**Figure 2** shows the gelation diagram of emulsions made with WPI and soy bean oil after heat treatment at 90°C for 30 min (A) and the trend of the change in the boundary line of gelation when the conditions were changed (B).
**Figure 3** shows the changes in storage modulus (*G*', •) and loss modulus (*G*", ○) at room temperature (- 20°C) of heated (90°C for 30 min) emulsion (2.4% protein, 10% soy oil) made with UF whey retentate, WPC (A392), WPI (A895) and SPI after addition of 20 mM CaCl₂ as a function of time.
**Figure 4** shows the changes in storage modulus (*G*', •), loss modulus -(*G*", ○) and pH (Δ) of pre-heated (90°C for 30 min) emulsion (2.4% whey protein (A392) and 10% sunflower oil) at room temperature (∼20°C) after addition of 0.8% GDL as a function of time.
**Figure 5** shows the G' of heated (90°C for 30 min) emulsion (2.4% protein, 10% soy oil) made with UF whey retentate, WPC (A392), WPI (A895) and SPI after addition, of 0.8% GDL for 3 hours.
**Figure 6** shows the changes in storage modulus (*G*', •) and loss modulus (*G*", ○) at 20°C of
emulsion made from 3.2% whey protein (WPC A392) and 10% soy oil after addition of 0.8% GDL as a function of time. The emulsions were heated at different temperatures for 10 min.
**Figure 7** shows the storage modulus (*G*') at 20°C of 3.2% protein (A) heated emulsion gel made with different oil concentrations after addition of 0.8% GDL for 3 hours.
**Figure 8** shows the storage modulus (*G*') at 20°C of heated emulsion gel made with 15% soya oil and different protein (WPC A392) concentrations after addition of 0.8% GDL for 3 hours.
**Figure 9** shows the storage modulus (*G*') at 20°C of heated (90°C for 30 min) emulsion gel made with 3.2% whey protein (WPC A392) and 10% fat obtained from soya oil, AMF and fresh cream after addition of 0.8% GDL for 3 hours.
**Figure 10** shows the storage modulus (*G*') at 20°C of heated (90°C for 30 min) emulsion gel made with 3.2% whey protein (WPC A392) and 10 w/w% oil/fat obtained from soya oil, AMF and fresh cream after addition of 20 mM CaCl₂ for 3 hours.
**Figure 11** shows the changes in storage modulus (*G*', •) and loss modulus (*G*", ○) of emulsion gel at 20°C after addition of 0.8% GDL as a function of time. The emulsion gel is made with 20% reconstituted emulsion powder. The powder was produced from preheated (90°C for 10 min) emulsion made with 3% WPC and 10% soya oil.
**Figure 12** shows the changes in the firmness (*G*') of process cheese. Control 1: normal rennet casein process cheese formulation, control 2: process cheese with addition of WPC, HWPCE: process cheese with heated (90°C for 30 min) emulsion made with WPC.
**Figure 13** shows the changes in storage modulus (*G*', •) and loss modulus (*G*", ○) of emulsion gel at 20°C after addition of 0.8% GDL as a function of time. The emulsion gel made with 3.0% whey protein (WPI A895) and 10 w/w% milk fat (AMF) was retorted at 121°C for 16 min and stored at room temperature for 12 months.
Figure **14** shows the viscosity at a shear rate of 53.3 s⁻¹ of the acid gels comprising heated emulsion made with 3.6% protein (WPI A895) and 10 w/w% milk fat (AMF).

### EXAMPLES

The following examples further illustrate practice of the invention.

### Materials and Methods

The following materials and methods were generally used in the examples listed below. The use of specific material and deviation from these general methods are specifically mentioned for each example.

### Sources of protein

Commercial whey protein concentrates containing 80% protein were manufactured from cheese whey (ALACEN 392, A392) or acid casein whey (ALACEN 342, A342) by Fonterra Co-operative Group Limited.

Commercial whey protein isolate (ALACEN 895, A895) containing 90% protein was manufactured by Fonterra Co-operative Group Limited.

Commercial soy protein isolate (6000) containing 90 % protein was manufactured by Protient.

### Sources of fat

Fat products were sun flower oil (from super market), soy oil (from super market), and anhydrous milk fat, AMF (a commercial product)

### Salts

NaCl and CaCl₂, both were of analytical grade.

### Water

The water used in all the experiments was purified using Milli-Q system, Millipore Corp., Bedford, MA 01730, USA; control.

### Preparation of oil-in-water emulsions

Whey protein solutions (pH ∼ 6.9) were prepared, so that upon mixing with various quantities of oil/fat the final protein concentrations of 2-12%, w/w, were achieved, by dissolving one of the protein powders in water at 50 °C and stirring for 30 min. The protein solutions were then mixed with oil or fat so that the final mixture contained 5 to 40 % (w/w) oil/fat.

To make stable emulsions, the mixtures were homogenized at 50 °C in a two stage homogenizer, first stage and a second-stage pressures of 400 and 50 bar respectively. The mixtures were passed through the homogenizer three times to form the fine emulsions with an average size (d₃₂) of about 0.2 µm.

### Preparation of emulsion gels

The homogenized emulsions were filled into glass containers or metal cans and were then heated in a water bath at 90 °C for 30 minutes or retorted at 121 °C for 16 min. The emulsions were then cooled down to the room temperature in a water bath. Following the heat treatment and optional cooling, salt (Ca²⁺ or Na⁺) is added to the emulsion or the emulsion is acidified to pH < 5.0 by addition of Glucono-δ-laotone (GDL) or fermentation.

### Dynamic rheological measurements

Dynamic oscillatory viscoelasticity of the emulsion gels was investigated at low strain using a controlled stress rheometer (Physica MCR301, Anton Paar, Germany) using a cup and bob configuration. About 19 ml of an emulsion sample was poured into the sample cell and covered with a thin layer of low viscosity mineral oil to prevent evaporation. All measurements were made in the linear viscoelastic region (0.5% strain) and at a constant frequency of 1 Hz. All the measurements were made in duplicate at a constant temperature of 20 °C:

### Example 1

### Identifying the upper limit of protein and oil concentrations so that the emulsions remain liquid upon heating

Whey protein solutions (pH ∼ 6.9) were prepared, so that upon mixing with various quantities of oil (soy bean oil) the final protein concentrations of 1-8%, w/w, were achieved, by dissolving WPI (A895) powders in water at 50 °C and stirring for 30 min. The protein solutions were then mixed with oil or fat so that the final mixture contained 5 to 50% (w/w) oil/fat.

To make stable emulsions, the mixtures were homogenized at 50 °C in a two stage homogenizer, first stage and a second-stage pressures of 400 and 50 bar respectively. The mixtures were passed through the homogenizer three times to form the fine emulsions with an average size (d₃₂) of about 0.2 µm.

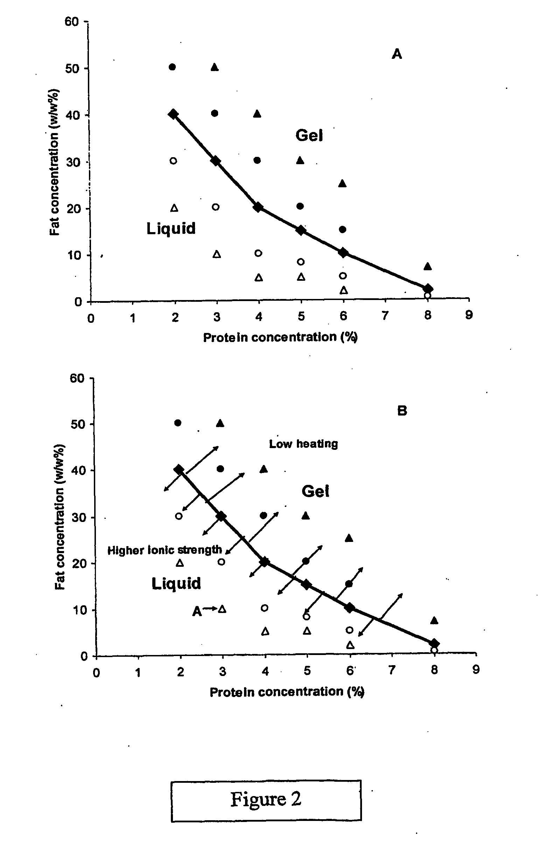

The homogenized emulsions were filled into glass tubes and were then heated in a water bath at 90 °C for 30 minutes. The emulsions were then cooled down to the room temperature in an ice bath. The emulsions were examined by visual observation. Figure 2A show the gelation diagram of emulsions made with WPI and soy bean oil after heat treatment at 90°C for 30 minutes. The emulsion remained at liquid under the boundary line at the conditions, whereas it forms gel when the concentrations of protein or fat were above the boundary line.

This boundary line will move when the conditions of emulsion formation, environment conditions and heat treatment change. For example, the boundary line will move toward up to gel direction when the intensity of heat treatment decreases. The boundary line will move down to liquid direction when the ionic strength increases in system (Figure 2B). For example, point A (3% protein and 10 w/w% oil) was liquid after heat treatment at above conditions. It formed a gel when the emulsion made with 3% protein and 10 w/w% oil was heated in the presence of 150 mMNaCl.

This example demonstrates the whey protein-stabilized emulsions are stable (remained liquid) against heat treatment under conditions. The stable emulsions (liquid) can be used to form the gel at ambient temperature under acidic conditions or addition of Ca²⁺.

### Example 2

### Gelation at room temperature of pre-heated emulsions after addition of CaCl₂

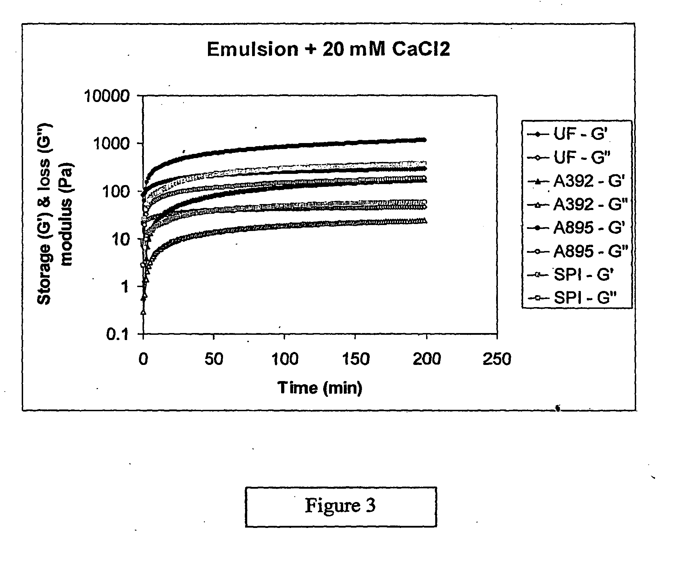

Emulsions containing 2.4% protein (whey protein UF (ultrafiltration) retentate, WPC A392, WPI A895, SPI (soy protein isolate)) and 10% w/w, milk fat (AMF), were heated at 90 °C for 30 min, and then cooled down to room temperature in a cold water bath. CaCl₂ (20 mM) was then added and the gel firmness was monitored over time. Figure 3 shows that all heated emulsions formed the gel (*G*' > *G*") at room temperature after addition of CaCl₂ and the firmness increased with an increase in the time

This example indicates that the heated emulsions made with WPC, WPI, whey protein UF retentate or soy bean protein can form the gel in the presence of Ca²⁺. The firmness of gel was different dependent on the protein source. The firmness of gel obtained from emulsions is: WPI > SPI > UF retentate > WPC. This example demonstrates that various levels of gel firmness can be achieved from choosing different protein sources.

### Example 3

### Gelation of heated emulsion made with protein at acidic conditions

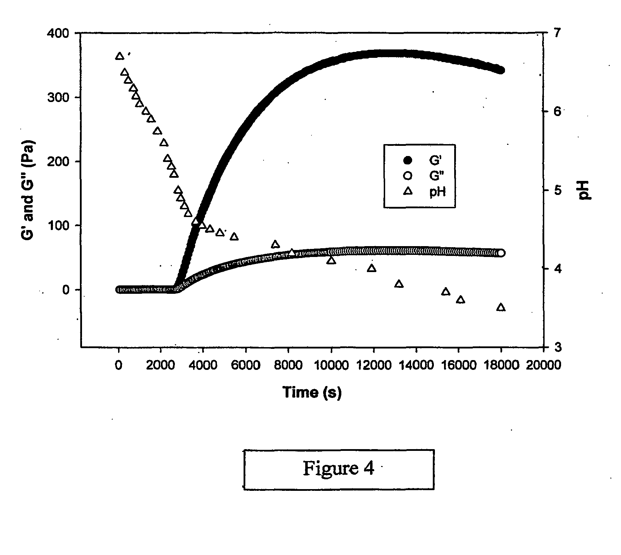

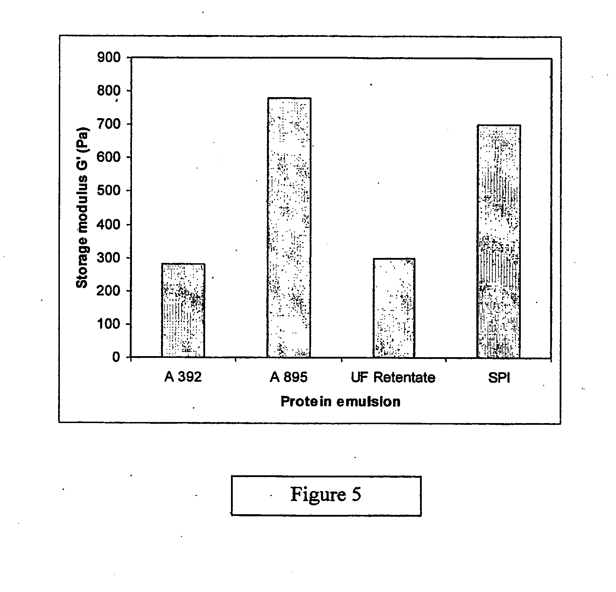

Emulsions containing 2.4% protein (whey protein UF (ultrafiltration) retentate, WPC A392, WPI A895, SPI (soy protein isolate) and 10% w/w, milk fat (AMF), were heated at 90°C for 30 min, and then cooled down to room temperature in a cold water bath. 0.8% GDL was then added and the gel firmness was monitored at 20°C over time. Figure 4 shows that the heated emulsions made with WPC A392 formed the gel (*G*' > *G*") at room temperature when pH of heated emulsion decrease to about pH 5 and the firmness (G') increased with an decrease in pH until pH arrived at about 4.2. This indicates the gelation of heated emulsion made with whey protein when pH of emulsion was lower than 5. Figure 5 shows that the different storage modulus *G*' (firmness of gel) of emulsion gel made with different protein sources, indicating the firmness of gel was related to the protein source.

The firmness of gel obtained from emulsions is: WPI > SPI > UF retentate > WPC. This example demonstrates that various levels of gel firmness can be achieved from choosing different protein sources.

### Example 4

### Gelation of emulsions heated at different temperatures .

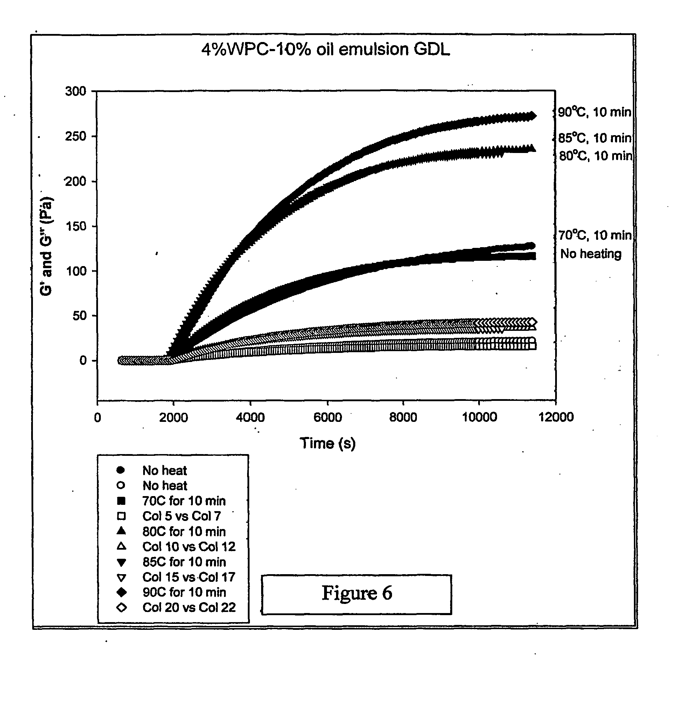

Emulsions containing 3.2% protein (WPC A3 92) and 10% soy bean oil were heated at different temperatures for 10 min, and then cooled down to 20°C in a cold water bath. 0.8% GDL was then added to emulsions and the properties of emulsions were monitored at 20°C over time. Figure 6 shows the changes in the *G*' and *G*" of emulsions with an increase in the time. Emulsion heated at higher temperatures had higher G' than that of emulsions heated at lower temperatures, although all emulsions including emulsion without heating can form the gel (*G'* > *G"*) when pH was lower than 5.

This example demonstrates that the heat temperature affect the formation of gel and gel properties. Manipulation heating temperature can be used to achieve a desired texture in a product.

### Example 5

### Gelation of emulsions made with different concentrations of oil

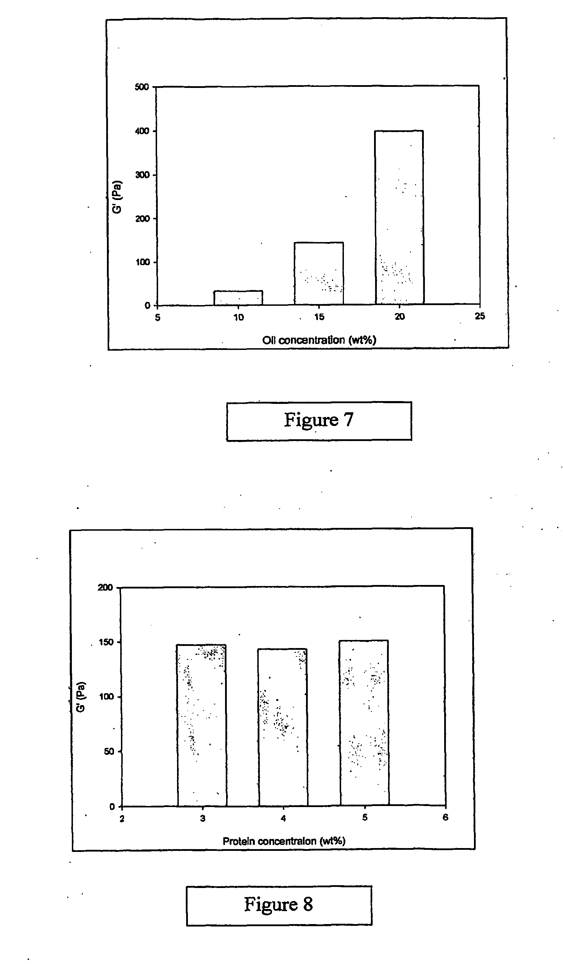

Emulsions containing 3.2% protein (WPC A392) and different concentrations of soy bean oil were heated at 90°C for 30 min, and then cooled down to room temperature in a cold water bath. 0.8% GDL was then added and the gel firmness was monitored at 20°C over time. Figure 7 shows that the maximum G' of emulsions increased with an increase in the oil concentrations.

This example demonstrates that emulsion gels can be formed at different oil/fat levels and can be used to achieve a desired texture in a product by controlling oil/fat contents.

### Example 6

### Gelation of emulsions made with different concentrations ofprotein

Emulsions containing different protein (WPC A392) concentrations and 15 w/w% soy bean oil were heated at 90°C for 30 min, and then cooled down to room temperature in a cold water bath. 0.8% GDL was then added and the gel firmness was monitored at 20°C over time. Figure 8 shows there were slightly different maximum *G*' of emulsions made with different protein concentrations.

This example demonstrates that emulsion gels can be formed at different protein levels and can be used to achieve a desired texture in a product by controlling protein contents.

### Example 7

### Gelation of emulsions made with different lipid sources

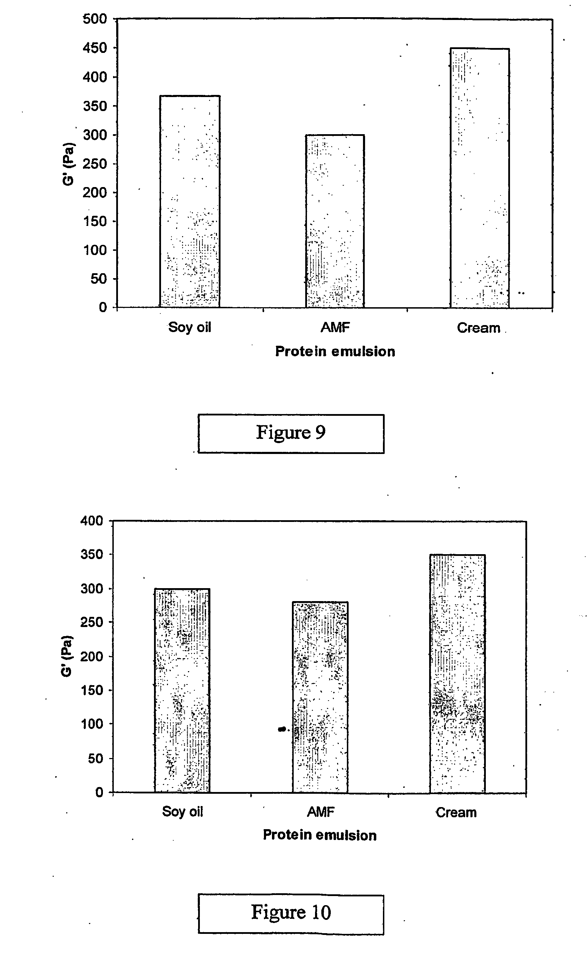

Emulsions containing 3.2% protein (WPC A392) and 15 w/w% different types of lipid were heated at 90°C for 30 min, and then cooled down to room temperature in a cold water bath. 0.8% GDL was then added and the gel firmness was monitored at 20°C over time, Figure 9 shows there were slightly different maximum *G*' of emulsions made with different types of lipid sources.

This example demonstrates that acidic emulsion gels can be formed from different oil/fat sources. It can be used to achieve a desired formulation in a product by choosing different oil/fat sources.

### Example 8

### Gelation of emulsions made with different lipid sources

Emulsions containing 3.2% protein (WPC A392) and 15 w/w% different types of lipid were heated at 90°C for 30 min, and then cooled down to room temperature in a cold water bath. 20 mM CaCl₂ was then added and the gel firmness was monitored at 20°C over time. Figure 10 shows there were slightly different maximum *G*' of emulsions made with different types of lipid sources.

This example demonstrates that Ca²⁺-induced emulsion gels can be formed from different oil/fat sources. It can be used to achieve a desired formulation in a product by choosing different oil/fat sources.

### Example 9

### Gelation of emulsion reconstituted from emulsion powder made with heated emulsions

Emulsion containing 3% whey protein (WPI A895) and 10 w/w milk fat (AMF) at pH 6.7 was heated at 90°C for 30 min and cooled down to 20°C in a cold water bath. Heated emulsion was then dried to powder using spray dryer (Puluis GB22 unit, GF Drying Attachment, Yamato Scientific Co., Tokyo, Japan) under conditions (Drier inlet temperature 180°C, Chamber temperature 80°C). The powder was: moisture 1.6%, protein 23% and fat 75%.

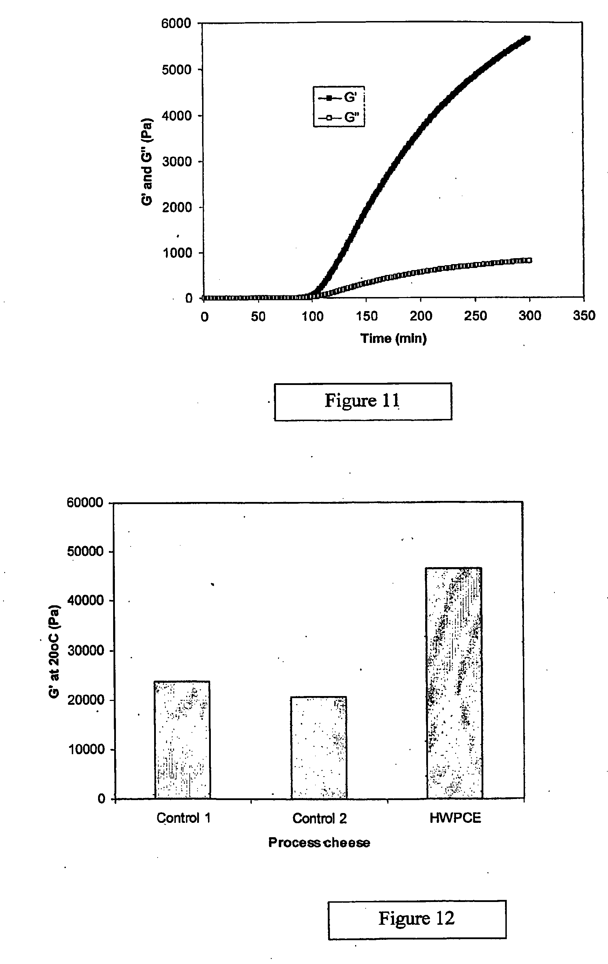

The above emulsion powder was reconstituted with water to emulsion with ∼4% protein and ∼15% fat pH 6.7. 0.8% GDL was then added to the reconstituted emulsion and the gelation properties were monitored at 20°C over time. Figure 11 shows that the reconstituted emulsions made with WPI A895 formed the gel (*G'* > *G*") at room temperature after addition of GDL and the firmness increased with an increase in the time. This indicates the gelation of emulsion reconstituted from the emulsion powder when pH of emulsion was lower than 5.

This example demonstrated that heated emulsions made with whey proteins can be dried to powder. The emulsion reconstituted from the emulsion powder also can be used to form the gel under same conditions as the gelation of heated emulsion without drying. The properties of gel made from emulsion reconstituted powder are similar to that of gel made from heated emulsions. It can be used to produce an ingredient, which can be used to achieve a desired formulation in making emulsion gel or food product after reconstitution.

### Example 10

### Instant sweet dairy dessert or flavour silk tofu made with whey protein emulsion gel

Formula: 4% protein (WPC A392), 7 w/w% milk fat (AMF), 10% sugar and 0.1% green tea flavour.

Process: WPC solutions with sugar (pH ∼ 6.9) were prepared at 50°C for 30 min and then mixed with milk oil. The protein and milk fat mixture was homogenized at 400/50 bar and at 50°C. After homogenisation, the emulsions were heated at 90°C for 30 min.

0.8% GDL or 50 mM CaCl₂ and 0.1 % flavour was added to the heated emulsions. Emulsions containing GDL or CaCl₂ were put in the containers. After 4 hours, the gel in the containers can be served as an agreeable taste dairy dessert or flavour silk tofu with a pleasant mouthfeeling.

In another batch, heated emulsion was adjusted to pH 4.2 with citric acid. The emulsion formed an agreeable taste dairy dessert or flavour silk tofu with a pleasant mouthfeeling.

This example demonstrates that the food ingredients such as flavours, sweeter and food acid additives can be added to heated emulsion to achieve a desired formulation in making a food. The food will remain the properties of emulsion gel and give a agreeable food product.

### Example 11

### Addition of pre-heated emulsions in rennet casein based processed cheese for enhancing the firmness

### Ingredients

Rennet casein
WPC (ALACEN 392)
Milkfat
TSC, Salt, Citra acid

**Table 1: formula of imtitation cheese**

| Ingredients | Control 1 | HWPCE | Control 2 |
|---|---|---|---|
| R casein (g) | 6.6 | 5.3 | 5.3 |
| WPC emulsion (g) | | | |
| Heated WPC emulsion (g) | 22.75 | 22.75 (0.7 g WPC, 7.5 g oil) | |
| WPC (g) | | 0.7 | 1.4 |
| Milk fat (g) | 7.5 | | 7.5 |
| (TSC) (g) | 0.80 | 0.80 | 0.80 |
| Salt (g) | 0.3 | 0.3 | 0.3 |
| Citra acid (g) | 0.25 | 0.25 | 0.25 |
| Water (g) | 14.55 | | 14.55 |

**Control 1:** normal rennet casein process cheese formulation.
**HWPCE:** process cheese with heated WPC emulsion.
**Control 2.** process cheese with addition of WPC.
**Cheese were processed at RVA,** conditions: 800 rpm, 90°C for 10 min.
**Preparation of emulsion:** 3% proteins (WPC A392), 33% oil/milk fat, water, homogenization at 450/50 bar, 50°C, pass through twice.
**Heated emulsion:** emulsion was heated at 90°C for 20 min.

**Table 2: Results of pH, moisture and texture properties of processed cheese**

| | Control 1 | HWPCE | Control 2 |
|---|---|---|---|
| pH | 5.90 | 5.88 | 5.84 |
| Moisture (%) | 49.36 | 50.95 | 49.24 |

Figure 12 shows that the firmness (*G*') of process cheese containing heated emulsion made with WPC were higher (∼ two times) than that of normal process cheese (control 1) containing no emulsions at same total protein and fat levels contained in process chose. In addition, the process cheese containing heated emulsion made with whey protein have higher (∼ two times) firmness (*G*') than that of process cheese containing same whey protein concentration (control 2) at same total protein and fat levels. This indicates that the heated emulsions made with whey protein formed a firm structure with casein matrix during processing to enhance the firmness of process cheese.

This example demonstrates that the heated emulsion can be used to achieve as a thick ingredient in promoting the texture and structure of solid or semi-solid food products such as process cheese.

### Example 12

### Gelation of heated emulsion after storage for 12 months

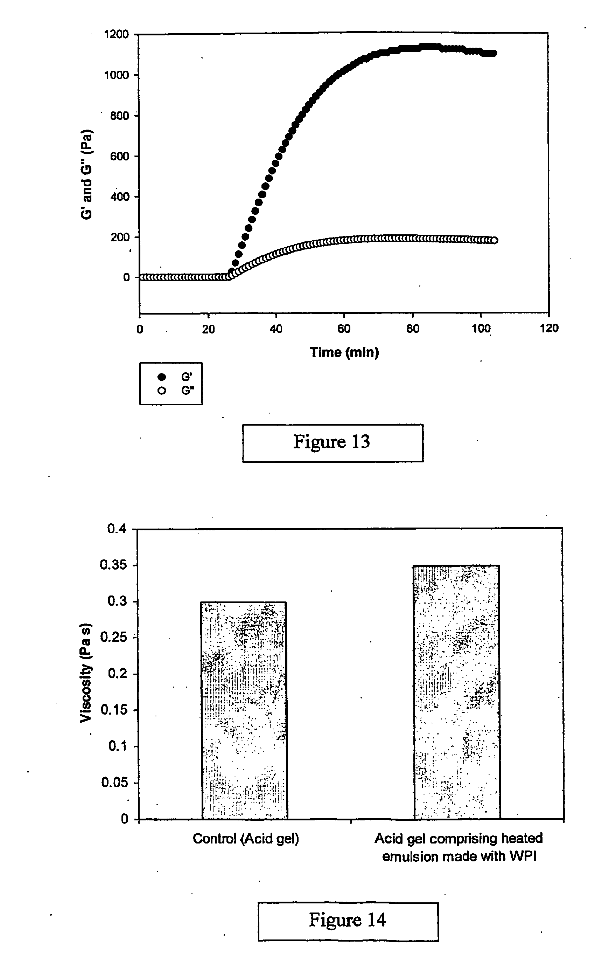

Emulsion made with 3% protein (WPI A895) and 10 w/w% milk fat (AMF) was filled in a 200 ml can and sealed. Cans of emulsion were then retorted at 121 °C for 16 min and cooled down to 20°C. Emulsion cans were storied at room temperature for 12 months. 0.8% GDL was added to heated emulsion after storage for 12 months. The gelation properties of emulsion gel is shown in Figure 13. It indicates the heated emulsion after storage for 12 months form a gel (*G*' > *G*") at pH < 5. The firmness (*G*') of emulsion gel after storage is similar to that of emulsion gel formed with fresh heated emulsion (Figure 5).

This example demonstrates that the heated emulsion can be stored for at least 12 months at room temperature to achieve a desired formulation in making emulsion gel or food product without change its properties.

### Example 13

### Addition of heated emulsions in acid gel or yoghurt for enhancing the firmness

### Process:

**Preparation of acid gel:** Skim milk powder (Fonterra Co-operative Group Limited, Auckland) was recombined with water to an aimed protein content of 3.4%. The skim milk was two-stage homogenized (150/50 bar) (APV Rannie Lab) and heat treated (in 20 min from 50°C to 90°C, hold-time 13 min at 90°C) in a steam bath. After heat treatment, the milk was cooled, 0.01 % w/w sodium azide (Sigma) was added as a preservative, and the milk was stored over night at refrigeration conditions.
   The milk was acidified by adding 1.65% w/w glucono-δ-lactone (Sigma) in order to reach pH 4.2 after incubation at 42°C for 5.5 hours. After incubation, the acid gel was cooled in ice water to 20-25°C and stirred a few times by hand. The acid gel was smoothened using an UltraTurrax for 4 min at low speed.
**Preparation of heated emulsion:** 3.6 % proteins (WPC A392), 10 w/w% oil/milk fat, water, homogenization at 450/50 bar, 50°C, pass through twice to form emulsion. Then emulsion was heated at 90°C for 30 min and was then cooled down to room temperature in a water bath.
**Mixing heated emulsion with acid gel:** At ambient temperature, heated emulsion was mixed with the stirred acid gels in ratio 1:9. The combined heated emulsion-acid gel and control sample (acid gel) were stored for 6 days at refrigeration temperature until viscosity measurements were performed: Viscosities were measured using a Paar Physica MCR301 (Anton Paar) equipped with a Couette geometry (diameter outer cylinder = 27 mm and diameter inner cylinder = 24 mm) in the shear rate 53.3 s⁻¹. Incorporation of WPC sheared emulsion gel in the acid gel resulted in an about 10% increase in viscosity (Figure 17).

This example demonstrates that the heated emulsion made with WPC can be used to achieve as a thick ingredient in promoting the texture and structure of solid or semi-solid food products such as acid gel or yoghurt.

### UTILITY

Those skilled in the art would appreciate that:
- Those gels could be prepared from a wide range of:
   ○ Protein/water/oil compositions
   ○ Temperature/time combinations to get gels.
   ○ Emulsion gel can be formed in the UHT processing conditions, thus emulsion is heated first and then filled to containers or packagers, the gel is formed in the containers or packagers with the mixing with salt or acidic agent or fermentations.
- The emulsions can include oil-soluble materials
- One can add flavours, colours, and many other ingredients that can improve the qualities of those emulsion gels.

In general, the invention following benefits and applications:
○ Tofu kind products made from milk proteins.
○ Packaged dairy Tofu with sterilization.
○ Dairy dessert or Jellies.
○ Dairy cakes.
○ Whey protein cheese

This invention provides a processing for producing the above products in the UHT processing conditions.

Any discussion of documents, acts, materials, devices or the like that has been included in the present specification is solely for the purpose of providing a context for the present invention. It is not to be taken as an admission that any or all of these matters forms part of the prior art base or were common general knowledge in the field relevant to the present invention as it existed before the priority date.

The above examples are illustrations of the practice of the invention. It will be appreciated by those skilled in the art that the invention can be carried out with numerous modifications and variations. For example, the emulsion can show variations in protein concentration and pH, the methods of emulsification can be varied, and the oils or fats and whey protein sources and heating steps can also be varied.

## Claims

1. A method of preparing a gel comprising:
(a) forming an oil-in-water emulsion by mixing oil or fat with an aqueous medium wherein the mixture comprises 2% to 12% (w/w) of a heat-settable protein and 5% to 40% (w/w) oil or fat or a mixture of oil and fat, and homogenising at a pressure in the range 100 to 2000 bar;
(b) heating the homogenised emulsion to 50°C to 200°C for a period sufficient to denature the proteins without allowing a gel to form;
(c) optionally cooling;
(d) adding a salt to the heat-treated emulsion or acidifying the heat-treated emulsion by addition of acid, or acid-forming products or fermentation to form the gel.

2. A method as claimed in claim 1 wherein the emulsion is heated before filling into containers or packaging, and then forms the gel in containers or packaging after mixing with a salt or acidification.

3. A method as claimed in claim 1 or claim 2 wherein the heat treated emulsion is transferred to a pre-sterilised container and mixed aseptically with the salt or acidifying agent.

4. A method as claimed in any one of claims 1 to 3 wherein the protein is from the group of proteins consisting of whey proteins, soy proteins, and myofibrillar (skeletal/meat) proteins, egg proteins and blood proteins.

5. A method as claimed in any one of claims 1 to 4 wherein the protein content of the emulsion is 2% to 8% (w/w).

6. A method as claimed in any one of claims 1 to 5 wherein the protein is whey protein.

7. A method as claimed in any one of claims 1 to 6 wherein the whey proteins are provided from a whey protein isolate (WPI) or a whey protein concentrate (WPC).

8. A method as claimed in any one of claims 1 to 7 wherein the oil or fat is present in an amount from 7% to 35% (w/w).

9. A method as claimed in any one of claims 1 to 8 wherein the oil or fat is a vegetable oil or milk fat or a mixture thereof.

10. A method as claimed in any one of claims 1 to 9 wherein the heating step is carried out at a temperature in the range 80°C to 150°C.

11. A method as claimed in any one of claims 1 to 10 wherein the heated emulsion is acidified to a pH in the range of 3.0 to 5.0.

12. A method as claimed in claim 1 wherein the homogenisation pressure is 300 to 2000 bar.

13. A method as claimed in any one of claims 1 to 12 wherein a salt is added to the heat-treated emulsion, preferably source of sodium ions or soluble calcium ions, more preferably sodium ions or soluble calcium ions, most preferably sufficient sodium chloride to provide 10 to 300 mM exogenous sodium chloride, or sufficient calcium chloride to provide 4 to 12 mM exogenous calcium chloride.

14. A method as claimed in any one of claims 1 to 13 wherein the heat-treated emulsion is dried before gelling.

15. A method of preparing a food comprising:
(a) forming an oil-in-water emulsion by mixing oil or fat with an aqueous medium wherein the mixture comprises 2% to 12% (w/w) of a heat-settable protein and 5% to 40% (w/w) oil or fat or a mixture of oil and fat, and homogenising at a pressure in the range 100 to 2000 bar;
(b) heating the homogenised emulsion to 50°C to 200°C for a period sufficient to denature the proteins without allowing a gel to form;
(c) drying the heat-treated emulsion; and
(d) including the dried emulsion as an ingredient in a food as a thickening agent.

## Patentansprüche

1. Verfahren zur Zubereitung eines Gels, umfassend:
(a) Bilden einer Öl-in-Wasser-Emulsion durch Mischen von Öl oder Fett mit einem wässrigen Medium, wobei die Mischung 2% bis 12% (Gew.-%) eines thermisch fixierbaren Proteins und 5% bis 40% (Gew.-%) Öl oder Fett oder eine Mischung aus Öl und Fett umfasst und Homogenisieren bei einem Druck im Bereich 100 bis 2000 bar eintritt;
(b) Erwärmen der homogenisierten Emulsion auf 50 °Cbis 200 °C für einen Zeitraum, der ausreicht, die Proteine zu denaturieren, ohne die Bildung eines Gels zu erlauben;
(c) optionales Kühlen;
(d) Hinzufügen eines Salzes zur wärmebehandelten Emulsion oder Ansäuern der wärmebehandelten Emulsion durch Hinzufügen von Säure oder Säure bildenden Produkten oder Fermentierung, um das Gel zu bilden.

2. Verfahren wie in Anspruch 1 beansprucht, wobei die Emulsion vor Einfüllen in Behälter oder Verpackung erwärmt wird und dann das Gel in Behältern oder Verpackung nach Mischen mit einem Salz oder Ansäuern bildet.

3. Verfahren wie in Anspruch 1 oder Anspruch 2 beansprucht, wobei die wärmebehandelte Emulsion in einen vorab sterilisierten Behälter transferiert und aseptisch mit dem Salz oder Ansäuerungsmittel vermischt wird.

4. Verfahren wie in einem beliebigen der Ansprüche 1 bis 3 beansprucht, wobei aus der Gruppe von Proteinen stammt, die aus Molkenproteinen, Sojaproteinen, und myofibrillären (Skelett/Fleisch) Proteinen, Eiproteinen und Blutproteinen besteht.

5. Verfahren wie in einem beliebigen der Ansprüche 1 bis 4 beansprucht, wobei der Proteingehalt der Emulsion 2% bis 8% (Gew.-%) beträgt.

6. Verfahren wie in einem beliebigen der Ansprüche 1 bis 5 beansprucht, wobei das Protein Molkenprotein ist.

7. Verfahren wir in einem beliebigen der Ansprüche 1 bis 6 beansprucht, wobei die Molkenproteine aus einem Molkenproteinisolat (WPI) oder einem Molkenproteinkonzentrat (WPC) bereitgestellt werden.

8. Verfahren nach einem beliebigen der Ansprüche 1 bis 7, wobei das Öl oder Fett in einer Menge von 7% bis 35% (Gew.-%) anwesend ist.

9. Verfahren nach einem beliebigen der Ansprüche 1 bis 8, wobei das Öl oder Fett ein Pflanzenöl oder Milchfett oder eine Mischung davon ist.

10. Verfahren wie in einem beliebigen der Ansprüche 1 bis 9 beansprucht, wobei der Erwärmungsschritt bei einer Temperatur im Bereich 80 °C bis 150 °C ausgeführt wird.

11. Verfahren wie in einem beliebigen der Ansprüche 1 bis 10 beansprucht, wobei die erwärmte Emulsion auf einen pH-Wert im Bereich von 3,0 bis 5,0 angesäuert wird.

12. Verfahren wie in Anspruch 1 beansprucht, wobei der Homogenisierungsdruck 300 bis 2000 bar beträgt.

13. Verfahren wie in einem beliebigen der Ansprüche 1 bis 12 beansprucht, wobei der wärmebehandelten Emulsion ein Salz hinzugefügt wird, bevorzugte Quelle von Natriumionen oder löslichen Calciumionen, noch bevorzugter Natriumionen oder lösliche Calciumionen, am meisten bevorzugt ausreichendes Natriumchlorid ist, um 10 bis 300 mM exogenes Natriumchlorid bereitzustellen oder ausreichendes Calciumchlorid, um 4 bis 12 mM exogenes Calciumchlorid bereitzustellen.

14. Verfahren wie in einem beliebigen der Ansprüche 1 bis 13 beansprucht, wobei die wärmebehandelte Emulsion vor der Gelierung getrocknet wird.

15. Verfahren zur Zubereitung eines Nahrungsmittels, umfassend:
(a) Bilden einer Öl-in-Wasser-Emulsion durch Mischen von Öl oder Fett mit einem wässrigen Medium, wobei die Mischung 2% bis 12% (Gew.-%) eines thermisch fixierbaren Proteins und 5% bis 40% (Gew.-%) Öl oder Fett oder eine Mischung aus Öl und Fett umfasst und Homogenisieren bei einem Druck im Bereich 100 bis 2000 bar eintritt;
(b) Erwärmen der homogenisierten Emulsion auf 50 °Cbis 200 °C für einen Zeitraum, der ausreicht, die Proteine zu denaturieren, ohne die Bildung eines Gels zu erlauben;
(c) Trocknen der wärmebehandelten Emulsion; und
(d) Einschließen der getrockneten Emulsion als eine Zutat in einem Nahrungsmittel als Verdickung.

## Revendications

1. Procédé de préparation d'un gel, comprenant les étapes consistant à :
(a) former une émulsion d'huile dans de l'eau en mélangeant de l'huile ou de la graisse avec un milieu aqueux, le mélange comprenant de 2 % à 12 % (p/p) d'une protéine pouvant être fixée à chaud et de 5 % à 40 % (p/p) d'huile ou de graisse ou d'un mélange d'huile et de graisse ; et homogénéiser l'émulsion à une pression de l'ordre de 100 à 2000 bar;
(b) chauffer l'émulsion homogénéisée à une température de 50 °C à 200 °C pendant une durée suffisante pour dénaturer les protéines sans permettre la formation d'un gel ;
(c) éventuellement refroidir ;
(d) ajouter un sel à l'émulsion traitée à chaud ou acidifier l'émulsion traitée à chaud en ajoutant un acide ou des produits acidifiants ou par fermentation afin de former le gel.

2. Procédé selon la revendication 1, dans lequel l'émulsion est chauffée avant d'être versée dans des récipients ou un conditionnement, puis forme le gel dans les récipients ou le conditionnement après mélange avec un sel ou acidification.

3. Procédé selon la revendication 1 ou 2, dans lequel l'émulsion traitée à chaud est transférée dans un récipient pré-stérilisé et mélangée en asepsie avec le sel ou l'agent acidifiant.

4. Procédé selon l'une quelconque des revendications 1 à 3, dans lequel la protéine est choisie dans le groupe constitué de protéines lactosériques, de protéines de soja et de protéines myofibrillaires (squelettiques/viande), de protéines d'oeuf et de protéines sanguines.

5. Procédé selon l'une quelconque des revendications 1 à 4, dans lequel la teneur en protéine de l'émulsion est de 2 % à 8 % (p/p).

6. Procédé selon l'une quelconque des revendications 1 à 5, dans lequel la protéine est une protéine lactosérique.

7. Procédé selon l'une quelconque des revendications 1 à 6, dans lequel les protéines lactosériques sont obtenues à partir d'un isolat de protéine lactosérique (WPI) ou d'un concentré de protéine lactosérique (WPC).

8. Procédé selon l'une quelconque des revendications 1 à 7, dans lequel l'huile ou la graisse est présente en une quantité allant de 7 % à 35 % (p/p).

9. Procédé selon l'une quelconque des revendications 1 à 8, dans lequel l'huile ou la graisse est une huile végétale ou de la matière grasse laitière ou leur mélange.

10. Procédé selon l'une quelconque des revendications 1 à 9, dans lequel l'étape de chauffage est réalisée à une température de l'ordre de 80 °C à 150 °C.

11. Procédé selon l'une quelconque des revendications 1 à 10, dans lequel l'émulsion chauffée est acidifiée à un pH de l'ordre de 3,0 à 5,0.

12. Procédé selon la revendication 1, dans lequel la pression d'homogénéisation est de l'ordre de 300 à 2000 bar.

13. Procédé selon l'une quelconque des revendications 1 à 12, dans lequel un sel est ajouté à l'émulsion traitée à chaud, de préférence une source d'ions sodium ou d'ions calcium solubles, plus préférablement des ions sodium ou des ions calcium solubles, le plus préférablement suffisamment de chlorure de sodium pour fournir de 10 à 300 mM de chlorure de sodium exogène, ou suffisamment de chlorure de calcium pour fournir de 4 à 12 mM de chlorure de calcium exogène.

14. Procédé selon l'une quelconque des revendications 1 à 13, dans lequel l'émulsion traitée à chaud est séchée avant d'être gélifiée.

15. Procédé de préparation d'un aliment, comprenant les étapes consistant à :
(a) former une émulsion d'huile dans de l'eau en mélangeant de l'huile ou de la graisse avec un milieu aqueux, le mélange comprenant de 2 % à 12 % (p/p) d'une protéine pouvant être fixée à chaud et de 5 % à 40 % (p/p) d'huile ou de graisse ou d'un mélange d'huile et de graisse ; et homogénéiser l'émulsion à une pression de l'ordre de 100 à 2000 bar;
(b) chauffer l'émulsion homogénéisée à une température de 50 °C à 200 °C pendant une durée suffisante pour dénaturer les protéines sans permettre la formation d'un gel ;
(c) sécher l'émulsion traitée à chaud ; et
(d) inclure l'émulsion séchée en tant qu'ingrédient dans un aliment en guise d'épaississant.
